# DEMANDE DE BREVET EUROPEEN

(11) **EP 4 207 474 A1**
(43) Date de publication de la demande: **05.07.2023**
(21) Numéro de dépôt: 21306955.2
(22) Date de dépôt: 29.12.2021
(51) Int. Cl.: H01M 50/503, H01M 50/514, H01M 50/552

(54) **ENSEMBLE D'INTERCONNEXION ÉLASTIQUE DE CELLULES ÉLECTROCHIMIQUES ET PROCÉDÉ D'INSTALLATION ASSOCIÉ**

(71) Demandeur: Automotive Cells Company SE, 92300 Levallois Perret (FR)
(72) Inventeur: QUEYRENS, Mathieu, 33910 SAINT-DENIS-DE-PILE (FR); BAYLAC, Johan, 33800 BORDEAUX (FR); CHAUVEAU, Pierre, 33520 BRUGES (FR)
(74) Mandataire: Lavoix

(57) **Abrégé**

L'invention concerne un ensemble (10) d'interconnexion de cellules électrochimiques, comportant : deux cellules électrochimiques (12, 14), chacune comprenant une borne (22, 24), en saillie par rapport à une enveloppe selon un axe (26) ; ladite borne comprenant une surface de contact (28), parallèle à l'axe ;
ledit ensemble comprenant un dispositif (16) d'interconnexion, comportant deux zones d'assemblage (30) reliées l'une à l'autre ; telles que dans une configuration installée, chacune des zones d'assemblage est au contact de la surface de contact (28) de la borne correspondante.

Au moins l'une des zones d'assemblage comprend deux pattes (36) aptes à s'écarter élastiquement l'une de l'autre de sorte à emboîter élastiquement la zone d'assemblage sur la surface de contact de la borne correspondante, par translation du dispositif d'interconnexion selon un sens d'assemblage par rapport à ladite borne.

## Description

La présente invention concerne un ensemble d'interconnexion de cellules électrochimiques.

L'invention s'applique particulièrement à la fabrication de batteries de véhicules électriques ou hybrides.

Une cellule électrochimique comprend un électrolyte reçu dans une enveloppe externe fermée, en général de forme sensiblement parallélépipédique. La cellule électrochimique comprend généralement des bornes en contact avec l'électrolyte et fixées à l'enveloppe externe, à l'extérieur de ladite enveloppe.

Par exemple, la cellule électrochimique comprend un empilement d'électrodes positives reliées les unes aux autres et un empilement d'électrodes négatives reliées les unes aux autres, séparés par un séparateur. Un tel assemblage, connu sous le terme « stack », est reçu dans l'enveloppe externe.

Il est connu d'assembler, en série et/ou en parallèle, une pluralité de cellules électrochimiques afin de réaliser des modules électriques, à l'aide d'un dispositif d'interconnexion assurant un contact électrique entre les bornes de deux cellules voisines.

Les dispositifs d'interconnexion utilisés sont notamment des pièces métalliques embouties qu'il est nécessaire de souder sur les bornes afin d'assurer un contact électrique optimal. Une telle méthode d'installation nécessite ainsi des équipements coûteux et induit des risques de détérioration des cellules lors du procédé de soudage. De plus, cette méthode ne permet pas le démontage non destructif de l'ensemble en dissociant les cellules et le dispositif d'interconnexion.

Des systèmes démontables sont également connus mais n'offrent pas de résultats suffisants en termes de tenue mécanique ou de transmission de puissance électrique.

La présente invention a pour but de résoudre ces problèmes et de proposer un ensemble d'interconnexion simple à installer et à désinstaller, sans nécessiter de matériel coûteux.

A cet effet, l'invention a pour objet un ensemble d'interconnexion du type précité, ledit ensemble comprenant une première et une deuxième cellules électrochimiques, chacune desdites première et deuxième cellules comprenant une enveloppe externe et une borne, ladite borne de chacune des première et deuxième cellules étant en saillie par rapport à l'enveloppe externe de ladite première ou deuxième cellule, respectivement selon un premier axe et selon un deuxième axe ; ladite borne de chacune des première et deuxième cellules comprenant une surface de contact parallèle au premier ou au deuxième axe.

L'ensemble comprend en outre un dispositif d'interconnexion, comportant une première et une deuxième zones d'assemblage reliées l'une à l'autre ; telles que dans une configuration installée de l'ensemble d'interconnexion, chacune des première et deuxième zones d'assemblage est au contact de la surface de contact de la borne, respectivement de la première et de la deuxième cellules, le dispositif d'interconnexion assurant ainsi une connexion électrique entre les première et deuxième cellules.

Au moins l'une des première et deuxième zones d'assemblage comprend : une partie centrale ; et deux pattes en saillie par rapport à la partie centrale selon un même sens d'assemblage, chacune des pattes comprenant une extrémité libre, opposée à la partie centrale, les deux pattes étant aptes à s'écarter élastiquement l'une de l'autre de sorte à emboîter élastiquement l'au moins une des première et deuxième zones d'assemblage sur la surface de contact de la borne de la première ou de la deuxième cellule, par translation du dispositif d'interconnexion selon le sens d'assemblage par rapport à ladite borne.

Suivant d'autres aspects avantageux de l'invention, l'ensemble d'interconnexion comporte l'une ou plusieurs des caractéristiques suivantes, prises isolément ou suivant toutes les combinaisons techniquement possibles :
- la partie centrale de l'au moins une des première et deuxième zones d'assemblage présente un bord frontal apte à épouser une partie de la surface de contact ;
- le dispositif d'interconnexion comprend en outre un bras de préhension s'étendant à partir de l'extrémité libre d'une patte de l'au moins une des première et deuxième zones d'assemblage ;
- l'un de la borne et du dispositif d'interconnexion comporte une surface en creux et l'autre de la borne et du dispositif d'interconnexion comporte un élément en saillie apte à s'insérer dans ladite surface en creux ;
- la surface de contact de la borne comporte une encoche formant la surface en creux ; et une patte de l'au moins une des première et deuxième zones d'assemblage comporte un ergot apte à s'insérer dans l'encoche et formant l'élément saillant ;
- la borne comporte deux portions séparées par une fente formant la surface en creux ; et l'élément saillant est disposé entre les pattes de l'au moins une des première et deuxième zones d'assemblage et s'étend à partir de la partie centrale dans le sens d'assemblage ;
- chacune des première et deuxième zones d'assemblage du dispositif d'interconnexion comprend une partie centrale et deux pattes en saillie par rapport à la partie centrale, les pattes de la première et de la deuxième zones d'assemblage s'étendant respectivement selon un premier et selon un deuxième sens d'assemblage, chacune des pattes comprenant une extrémité libre, opposée à la partie centrale, les deux pattes de

chacune des première et deuxième zones d'assemblage étant aptes à s'écarter élastiquement l'une de l'autre de sorte à emboîter élastiquement ladite première ou deuxième zone d'assemblage sur la surface de contact de la borne, respectivement de la première et de la deuxième cellule, par translation du dispositif d'interconnexion respectivement selon le premier et selon le deuxième sens d'assemblage par rapport à ladite borne ;
- les premier et deuxième sens d'assemblage sont identiques ;
- les premier et deuxième sens d'assemblage sont opposés.

L'invention se rapporte en outre à un procédé d'assemblage de l'ensemble d'interconnexion précédemment décrit, comprenant la mise en contact électrique de chacune des première et deuxième zones d'assemblage du dispositif d'interconnexion avec la surface de contact de la borne, respectivement de la première et de la deuxième cellules, ladite mise en contact de l'au moins l'une des première et deuxième zones d'assemblage étant réalisée par emboîtement élastique sur la surface de contact de la borne correspondante, par translation du dispositif d'interconnexion selon le sens d'assemblage par rapport à ladite borne.

Suivant d'autres aspects avantageux de l'invention, le procédé comporte l'une ou plusieurs des caractéristiques suivantes, prises isolément ou suivant toutes les combinaisons techniquement possibles :
- la mise en contact de chacune des première et deuxième zones d'assemblage est réalisée par emboîtement élastique sur la surface de contact de la borne, respectivement de la première et de la deuxième cellules, par translation du dispositif d'interconnexion selon le premier ou le deuxième sens d'assemblage par rapport à ladite borne ;
- le procédé comprend la mise en contact électrique simultanée de la première et de la deuxième zones d'assemblage du dispositif d'interconnexion avec la surface de contact de la borne, respectivement de la première et de la deuxième cellules, ladite mise en contact électrique simultanée étant réalisée par emboîtement élastique de chacune des première et deuxième zones d'assemblage sur la surface de contact de la borne correspondante, par translation du dispositif d'interconnexion selon le sens d'assemblage par rapport auxdites borne.

L'invention se rapporte en outre à un organe électrique de type module ou batterie électrique, comprenant une première et une deuxième cellules électrochimiques ; et un dispositif d'interconnexion ; chacune des première et deuxième cellules comprenant une enveloppe externe et une borne, ladite borne de chacune des première et deuxième cellules étant en saillie par rapport à l'enveloppe externe de ladite première ou deuxième cellule, respectivement selon un premier axe et selon un deuxième axe ; ladite borne de chacune des première et deuxième cellules comprenant une surface de contact, parallèle au premier ou au deuxième axe ; le dispositif d'interconnexion, comportant une première et une deuxième zones d'assemblage reliées l'une à l'autre ; chacune des première et deuxième zones d'assemblage étant au contact de la surface de contact de la borne, respectivement de la première et de la deuxième cellules, le dispositif d'interconnexion assurant ainsi une connexion électrique entre les première et deuxième cellules ; au moins l'une des première et deuxième zones d'assemblage comprenant : une partie centrale ; et deux pattes en saillie par rapport à la partie centrale selon un même sens d'assemblage, chacune des pattes comprenant une extrémité libre, opposée à la partie centrale, ladite au moins une des première et deuxième zones d'assemblage étant emboîtée élastiquement sur la surface de contact de la borne de la première ou de la deuxième cellule, l'organe électrique étant susceptible d'être issu d'un procédé tel que précédemment décrit.

L'invention se rapporte en outre à un véhicule électrique ou hybride, comprenant un tel organe électrique.

L'invention sera mieux comprise à la lecture de la description qui va suivre, donnée uniquement à titre d'exemple non limitatif et faite en se référant aux dessins sur lesquels :
- la figure 1 est une vue de dessus, en coupe partielle, d'un ensemble d'interconnexion selon un premier mode de réalisation de l'invention ;
- la figure 2 est une vue partielle de dessus d'un ensemble d'interconnexion selon un deuxième mode de réalisation de l'invention ;
- la figure 3 est une vue partielle de dessus d'un ensemble d'interconnexion selon un troisième mode de réalisation de l'invention ;
- la figure 4 est une vue de dessus, en coupe partielle, d'un ensemble d'interconnexion selon un quatrième mode de réalisation de l'invention ; et
- la figure 5 est une vue en perspective d'un élément de l'ensemble d'interconnexion de la figure 4.

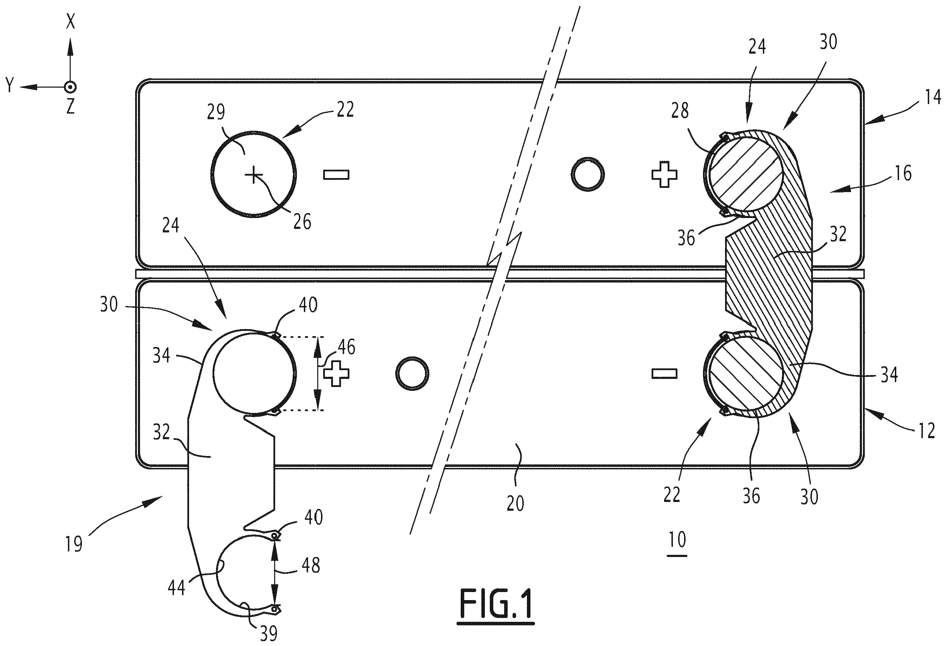

Les figures 1, 2, 3 et 4 représentent des ensembles 10, 110, 210, 310 d'interconnexion, respectivement selon un premier, un deuxième, un troisième et un quatrième modes de réalisation de l'invention.

Les ensembles 10, 110, 210 et 310 seront décrits simultanément ci-après, les éléments communs étant désignés par les mêmes numéros de référence.

L'ensemble 10, 110, 210, 310 d'interconnexion comporte une première 12, 212, 312 et une deuxième 14, 214, 314 cellules électrochimiques et un dispositif d'interconnexion 16, 116, 216, 316.

Le dispositif d'interconnexion 16, 116, 216, 316 est destiné à mettre en connexion électrique les première 12, 212, 312 et deuxième 14, 214, 314 cellules, comme il sera décrit ci-après. A cet effet, ledit dispositif d'interconnexion est formé d'un ou de plusieurs matériaux électriquement conducteurs, préférentiellement métalliques. Le dispositif d'interconnexion est par exemple réalisé en aluminium.

A titre indicatif, un élément est considéré ici comme électriquement conducteur si sa conductivité électrique est supérieure à σ = 0.7 * 10⁶ S·m⁻¹.

D'une manière générale, l'invention est apte à mettre en connexion électrique une pluralité de cellules, notamment par un montage en série. Dans le mode de réalisation de la figure 1, l'ensemble 10 comprend notamment un dispositif d'interconnexion supplémentaire 19 en prévision d'un ajout de cellule complémentaire.

Dans la suite de la description, il est considéré que les cellules de chaque ensemble 10, 110, 210, 310 sont identiques. Seule la première cellule 12, 212, 312 sera décrite ci-après.

La cellule 12, 212, 312 comprend une enveloppe externe 20 et au moins une première borne 22, 222, 322 disposée sur l'enveloppe externe. Typiquement, la cellule 12, 212, 312 comprend en outre une deuxième borne 24, 224, 324 également disposée sur l'enveloppe externe 20, comme visible sur les figures 1, 3 et 4.

La ou chaque borne forme une saillie par rapport à l'enveloppe externe 20. Dans les modes de réalisation représentés, chaque borne 12, 14, 212, 214, 312, 314 s'étend selon un axe 26 et comporte une surface radiale, dite surface de contact 28, 228, 328, parallèle audit axe 26.

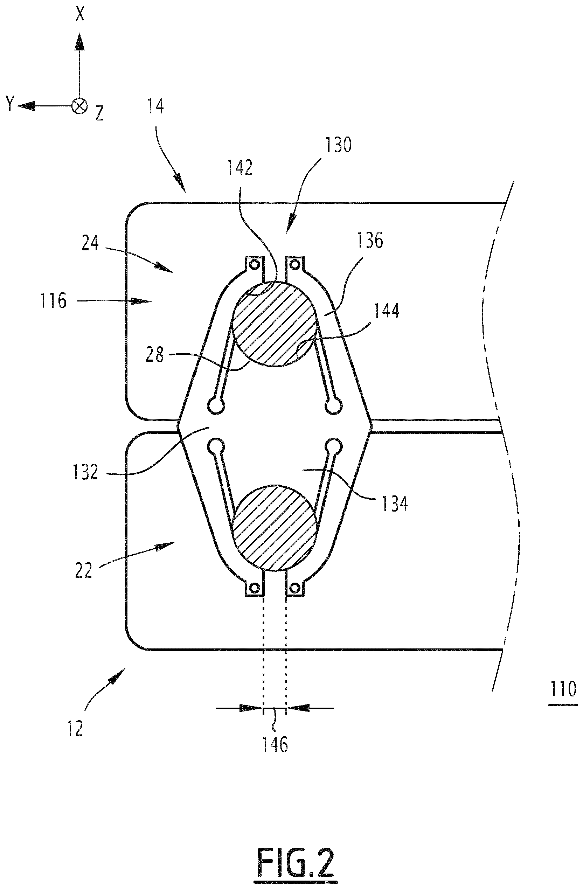

Dans le mode de réalisation des figures 1 et 2, la surface de contact 28 présente une section circulaire. Les surfaces de contact 228 et 328 seront décrites plus précisément ci-après.

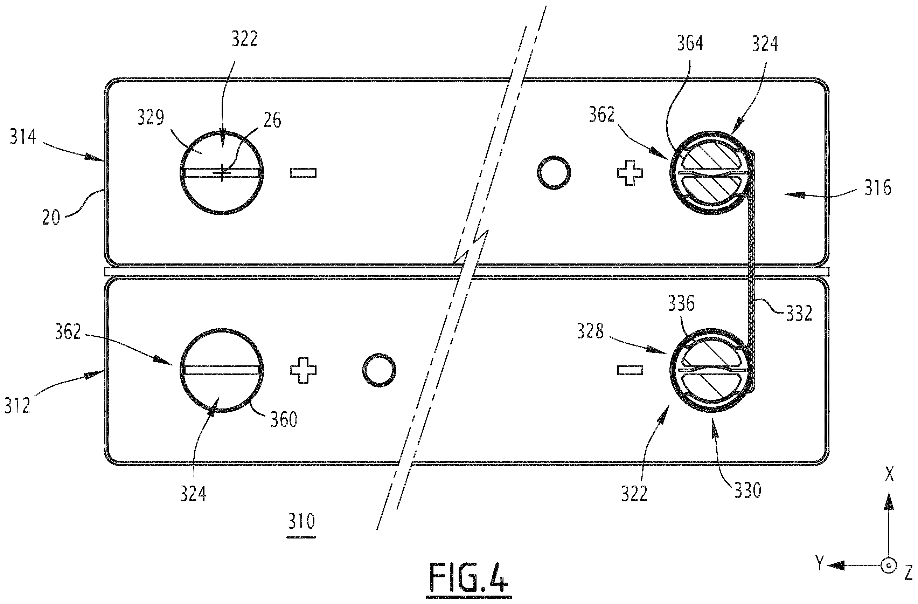

De manière optionnelle, comme visible sur les figures 1 et 4, la ou chaque borne comporte en outre une tête élargie 29, 329, formant une saillie radiale par rapport à la surface de contact 28, 328.

Il est considéré dans la présente description que la deuxième borne 24, 224, 324 de chaque cellule des ensembles d'interconnexion a une forme similaire à la première borne 22, 222, 322 de ladite cellule, les axes 26 des première et deuxième bornes d'une même cellule étant parallèles.

Par ailleurs, dans la présente description, il est considéré que les première 22, 222, 322 et deuxième 24, 224, 324 bornes d'une même cellule sont de polarités opposées.

Chacune des figures 1 à 4 montre l'un des ensembles 10, 110, 210, 310 dans une configuration installée dudit ensemble, correspondant éventuellement à une étape de montage d'un organe électrique de type module ou batterie, comme décrit ci-après. On considère une base orthonormée (X, Y, Z) associée à chaque ensemble 10, 110, 210, 310.

Dans la configuration installée, les première 12, 212, 312 et deuxième 14, 214, 314 cellules sont disposées côte à côte de sorte que la première borne 22, 222, 322 de la première cellule et la deuxième borne 24, 224, 324 de la deuxième cellule soient à proximité l'une de l'autre, les axes 26 desdites bornes étant sensiblement parallèles.

Dans le mode de réalisation représenté, on considère pour simplifier la description que les première et deuxième cellules sont alignées selon X, que les première et deuxième bornes d'une même cellule sont alignées selon Y et que les axes 26 sont parallèles à Z. L'installation de l'ensemble fonctionne cependant avec une tolérance dans l'alignement des cellules.

Le dispositif 16, 116, 216, 316 d'interconnexion va à présent être décrit. Dans la présente description, il est considéré que le dispositif d'interconnexion supplémentaire 19 de l'ensemble 10 d'interconnexion est identique au dispositif 16 d'interconnexion.

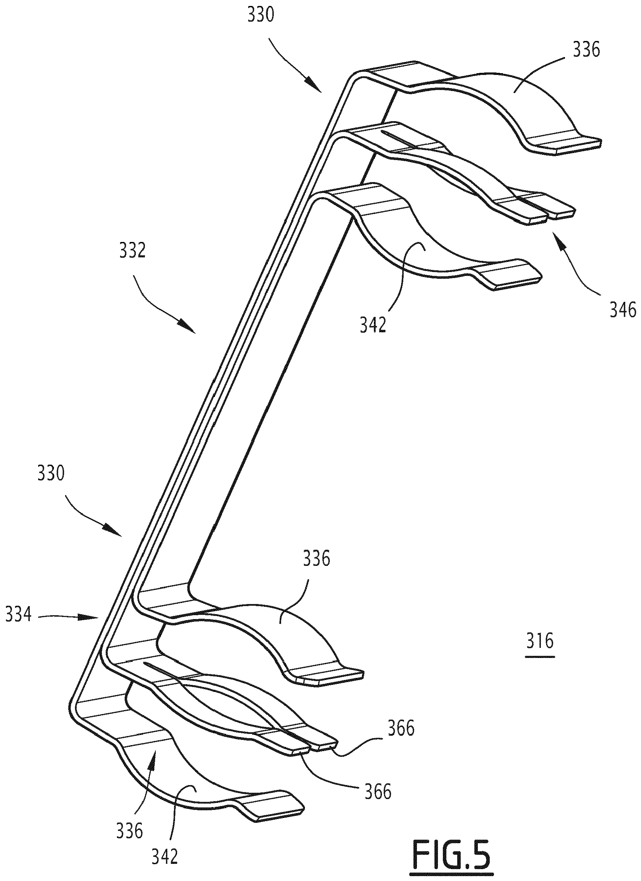

Le dispositif 16, 116, 216, 316 d'interconnexion comprend : une première et une deuxième zones d'assemblage 30, 130, 230, 330 ; et une zone de liaison 32, 132, 232, 332 disposée entre lesdites première et deuxième zones d'assemblage. Le dispositif d'interconnexion 316 de la figure 4 est notamment représenté seul sur la figure 5, dans une configuration au repos sans contrainte extérieure.

Au moins l'une des première et deuxième zones d'assemblage 30, 130, 230, 330 comprend : une partie centrale 34, 134, 234, 334 ; et deux pattes 36, 136, 236, 238, 336 en saillie par rapport à la partie centrale.

Chaque patte 36, 136, 236, 238, 336 s'étend entre la partie centrale 34, 134, 234, 334 correspondante et une extrémité libre 40. En outre, chaque patte 36, 136, 236, 238, 336 comprend un bord dit bord interne 42, 142, 242, 243, 342 orienté vers l'autre patte de la même zone d'assemblage. Le bord interne 42, 142, 242, 243, 342 présente de préférence une forme sensiblement complémentaire d'une partie de la surface de contact 28, 228, 328 des bornes.

Les pattes 36, 136, 236, 238, 336 sont élastiquement déformables, de sorte à écarter l'une de l'autre, de manière réversible, les extrémités libres 40 des deux pattes d'une même zone d'assemblage 30, 130, 230, 330.

Selon des modes de réalisation particuliers, tels que ceux des figures 1 à 3, la partie centrale 34, 134, 234 de chaque zone d'assemblage présente en outre un bord dit bord frontal 44, 144, 244 présentant également une forme sensiblement complémentaire d'une partie de la surface de contact 28, 228 des bornes.

Selon des modes de réalisation particuliers, tels que le mode de réalisation des figures 4 et 5, au moins l'une des zones d'assemblage 330 comporte un élément saillant supplémentaire 346, disposé entre les pattes 336, comme il sera décrit ci-après.

La zone de liaison 32, 132, 232, 332 s'étend entre deux extrémités, chaque extrémité étant reliée à la partie centrale 34, 134, 234, 334 de la première ou de la deuxième zone d'assemblage.

Dans les modes de réalisation représentés, les première et deuxième zones d'assemblage 30, 130, 230, 330 ont des formes identiques et seront décrites simultanément ci-après. En variante non représentée, les première et deuxième zones d'assemblage ont des formes différentes. Eventuellement, l'une des première et deuxième zones d'assemblage est apte à s'assembler à une borne de cellule selon un autre procédé que ceux décrits ultérieurement.

Dans la configuration installée des ensembles 10, 110, 210 et 310 représentée sur les figures 1 à 4, chacun des dispositifs 16, 116, 216 et 316 est emboîté élastiquement sur des bornes des première 12, 212, 312 et deuxième 14, 214, 314 cellules. Plus précisément, la première zone d'assemblage 30, 130, 230, 330 de chaque dispositif est emboîtée élastiquement sur la première borne 12, 212, 312 de la première cellule ; et la deuxième zone d'assemblage 30, 130, 230, 330 de chaque dispositif est emboîtée élastiquement sur la deuxième borne 14, 214, 314 de la deuxième cellule. Les dispositifs 16, 116, 216 et 316 seront décrits plus en détail ci-après par rapport à la base orthonormée (X, Y, Z) associée à chaque ensemble 10, 110, 210 et 310.

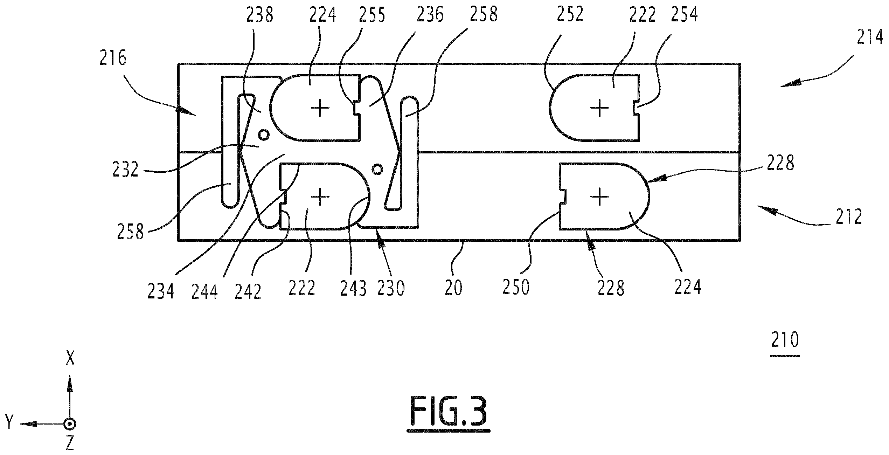

Les deux pattes 36, 136, 236, 238, 336 d'une même zone d'assemblage 30, 130, 230, 330 sont en saillie par rapport à la partie centrale 34, 134, 234, 334 correspondante, selon un même sens dit sens d'assemblage. Dans les modes de réalisation des figures 1 et 4, le sens d'assemblage est parallèle à la direction Y. Dans les modes de réalisation des figures 2 et 3, le sens d'assemblage est parallèle à la direction X.

Le dispositif 16, 19 d'interconnexion de l'ensemble 10 de la figure 1 va être plus particulièrement décrit.

Dans le dispositif 16, 19, le sens d'assemblage est le même pour les deux zones d'assemblage 30. Autrement dit, les première et deuxième zones d'assemblage 30 sont disposées d'un même côté de la zone de liaison 32. Dans la configuration de la figure 1, ladite zone de liaison 32 s'étend selon la direction X.

Pour chaque zone d'assemblage 30, le bord interne 42 des pattes 36 et le bord frontal 44 de la zone centrale 34 forment une surface continue en arc de cercle, apte à épouser la surface de contact 28 des bornes 22, 24.

Le dispositif d'interconnexion supplémentaire 19 est représenté sur la figure 1 avec une première zone d'assemblage emboîtée sur la deuxième borne 24 de la première cellule et avec une deuxième zone d'assemblage dans une configuration de repos, sans contrainte extérieure.

Une distance 46 entre les extrémités libres 40 des pattes 36 de la zone d'assemblage emboîtée sur une borne 24 est supérieure ou égale, et préférentiellement légèrement supérieure, à une distance 48 entre les extrémités libres 40 des pattes 36 de la zone d'assemblage au repos. Une tension élastique est ainsi maintenue, assurant le contact électrique entre la borne et le dispositif 16 d'interconnexion.

La zone de liaison 32 a la forme d'une plaque de préhension assemblée aux bornes. Ladite plaque est apte à rigidifier le dispositif 16, 19 pour en faciliter la tenue en configuration installée, ainsi qu'à augmenter la section de passage du courant.

Le dispositif 116 d'interconnexion de l'ensemble 110 de la figure 2 va être plus particulièrement décrit.

Dans le dispositif 116, les sens d'assemblage sont opposés pour les deux zones d'assemblage 130. Autrement dit, les première et deuxième zones d'assemblage 130 sont disposées sur des côtés opposés de la zone de liaison 132. Dans la configuration de la figure 2, ladite zone de liaison 132 s'étend selon la direction Y.

De même que dans l'exemple de la figure 1, pour chaque zone d'assemblage 130, le bord interne 42 des pattes 136 et le bord frontal 144 de la zone centrale 134 forment une surface sensiblement continue en arc de cercle, apte à épouser la surface de contact 28 des bornes 22, 24.

De même que dans l'exemple de la figure 1, une distance 146 entre les extrémités libres 40 des pattes 136 des zones d'assemblage emboîtées sur les bornes 22, 24 est supérieure ou égale, et préférentiellement légèrement supérieure, à une distance (non représentée) entre les extrémités libres 40 pour une zone d'assemblage au repos.

L'ensemble 210 de la figure 3 et le dispositif 216 d'interconnexion vont être plus particulièrement décrits.

Chaque borne 222, 224 des cellules 212, 214 de l'ensemble 210 comporte une surface de contact 228 de section non circulaire. Plus précisément, la surface de contact 228 présente un contour sensiblement en D avec une première 250 et une deuxième 252 surfaces opposées. La première surface 250 est sensiblement plane et la deuxième surface 252 est bombée. La première surface 250 comporte en outre une rainure 254 s'étendant selon Z.

Dans le dispositif 216, les sens d'assemblage sont opposés pour les deux zones d'assemblage 230. Autrement dit, les première et deuxième zones d'assemblage 230 sont disposées sur des côtés opposés de la zone de liaison 232. Dans la configuration de la figure 3, ladite zone de liaison 232 s'étend selon la direction Y.

Chaque zone d'assemblage 230 du dispositif 216 comporte une première patte 236, apte à s'emboîter sur la première surface 250 d'une borne, et une deuxième patte 238, apte à s'emboîter sur la deuxième surface 252 d'une borne. Ainsi, le bord interne 243 de la deuxième patte 238 présente une forme incurvée. Le bord interne 242 de la première patte 236 est sensiblement rectiligne, à l'exception d'un ergot 255 apte à s'insérer dans la rainure 254.

Comme dans les exemples précédemment décrits, le bord frontal 244 de la zone centrale 234 a une forme complémentaire d'une partie de la surface de contact 228, disposée entre les première 250 et deuxième 252 surfaces.

La forme complexe de la surface de contact 228 et des pattes 236, 238 permet notamment d'améliorer le contact électrique et/ou la tenue mécanique en configuration installée.

Chaque zone d'assemblage 230 du dispositif 216 comporte en outre un bras de préhension 258, s'étendant à partir de l'extrémité libre de l'une des première et deuxième pattes, ici de la deuxième patte 238.

L'ensemble 310 de la figure 4 et le dispositif 316 d'interconnexion des figures 4 et 5 vont être plus particulièrement décrits.

Chaque borne 322, 324 des cellules 312, 314 de l'ensemble 310 comporte deux portions 360 identiques, séparées par une fente 362. Ladite fente est sensiblement rectiligne et s'étend selon Y. A l'opposé de la fente 362, chacune des portions 360 présente une surface externe 364 de section en arc de cercle, les deux surfaces externes 364 formant la surface de contact 328 de la borne 322, 324.

Dans le dispositif 316, le sens d'assemblage est le même pour les deux zones d'assemblage 330. Autrement dit, les première et deuxième zones d'assemblage 330 sont disposées d'un même côté de la zone de liaison 332. Dans la configuration de la figure 4, ladite zone de liaison 332 s'étend selon la direction X.

Le bord interne 342 de chaque patte 336 de chaque zone d'assemblage est apte à épouser une surface externe 364 d'une portion 360 de borne.

En outre, chaque zone d'assemblage 330 comporte un élément saillant supplémentaire 346, disposé entre les pattes 336 et s'étendant à partir de la partie centrale 334 dans le sens d'assemblage. L'élément saillant supplémentaire 346 est apte à être inséré dans la fente 362 d'une borne, comme dans la configuration installée de la figure 4.

De préférence, l'élément saillant supplémentaire 346 comporte au moins une lame 366 recourbée. Dans le mode de réalisation représenté, comme visible sur la figure 5, l'élément saillant supplémentaire 346 comporte deux lames 366 recourbées. La forme des lames 366 est configurée de sorte que la courbure de chaque lame soit légèrement aplatie en étant glissée dans la fente 362, de sorte à assurer un bon contact par effet ressort avec chacune des portions 360 de la borne correspondante.

Dans le mode de réalisation représenté, les courbures des deux lames 366 d'un même élément saillant supplémentaire 346 sont orientées à l'opposé l'une de l'autre.

L'élément saillant supplémentaire 346 permet notamment d'améliorer le contact électrique entre les bornes 322, 324 et le dispositif 316.

Un premier procédé d'assemblage de l'ensemble 10, 110, 210, 310 d'interconnexion décrit ci-dessus va maintenant être décrit.

Tout d'abord, une zone d'assemblage 30, 130, 230, 330 du dispositif 16, 116, 216, 316 d'interconnexion est emboîtée élastiquement sur la surface de contact d'une borne. A titre d'exemple, on considère qu'il s'agit de la première zone d'assemblage et de la première borne 22, 222, 322 de la première cellule 12, 212, 312.

L'emboîtement élastique s'effectue par translation dans le sens d'assemblage, dans un plan perpendiculaire à l'axe 26 de la borne. Les extrémités libres des pattes 36, 136, 236, 238, 336 de la première zone d'assemblage s'écartent l'une de l'autre lors de l'emboîtement et se referment élastiquement sur la surface de contact 28, 228, 328 de la borne, pour assurer un bon contact électrique.

Dans l'ensemble 210 de la figure 3, il est possible de déformer élastiquement le dispositif 216 en cours d'emboîtement, par traction sur les bras de préhension 258, pour faciliter l'assemblage, notamment de l'ergot 255 avec la rainure 254 de la borne. Un appui sur l'extrémité du bras provoque une rotation de celui-ci et d'ouvrir par traction la zone d'appui circulaire du contact électrique.

Dans l'ensemble 310 de la figure 4, l'emboîtement élastique conduit en outre l'élément saillant supplémentaire 346 à pénétrer dans la fente 362 de la borne 322 et à former un contact électrique avec les portions 360, à l'intérieur de ladite fente.

Ensuite, la deuxième borne 24, 224, 324 de la deuxième cellule 14, 214, 314 est présentée devant la deuxième zone d'assemblage du dispositif 16, 116, 216, 316 d'interconnexion ; et ladite deuxième zone d'assemblage est emboîtée élastiquement sur la surface de contact 28, 228, 328 de ladite deuxième borne, de manière analogue à l'emboîtement élastique sur la première borne de la première cellule.

L'emboîtement élastique de la deuxième zone d'assemblage du dispositif 16, 116, 216, 316 est effectué en déplaçant l'une par rapport à l'autre les première et deuxième cellules, parallèlement au sens d'assemblage. Dans les exemples des figures 1 et 4, les première 12, 312 et deuxième 14, 314 cellules sont déplacées l'une par rapport à l'autre selon Y. Dans les exemples des figures 2 et 3, les première 12, 212 et deuxième 14, 214 cellules sont déplacées l'une par rapport à l'autre selon X.

Les première et deuxième cellules et le dispositif d'interconnexion de l'ensemble 10, 110, 210,310 d'interconnexion sont ainsi dans la configuration installée représentée respectivement sur chacune des figures 1 à 4.

De manière optionnelle, afin de former un organe électrique comportant une pluralité de cellules, le procédé comprend ensuite une étape d'assemblage d'un nouveau dispositif d'interconnexion, tel que le dispositif d'interconnexion supplémentaire 19, sur une autre borne 24 de la première 12 ou de la deuxième cellule. Une troisième cellule (non représentée) est ensuite assemblée audit nouveau dispositif d'interconnexion, par le même emboîtement élastique que décrit ci-dessus. Cette étape est répétée jusqu'à obtenir le nombre souhaité de cellules dans l'organe électrique, lesdites cellules étant connectées en série par les dispositifs d'interconnexion.

Ce premier procédé d'assemblage implique d'ajouter une à une les cellules destinées à former l'organe électrique.

Dans la variante précédemment évoquée, dans laquelle les première et deuxième zones d'assemblage du dispositif d'interconnexion sont différentes, une variante du premier procédé ci-dessus consiste à assembler ledit dispositif d'interconnexion à l'une des bornes par l'emboîtement élastique décrit ci-dessus ; et à l'autre borne par une autre méthode adaptée.

Un deuxième procédé d'assemblage de l'ensemble 10, 310 d'interconnexion décrit ci-dessus va maintenant être décrit. Ce deuxième procédé s'applique aux dispositifs d'interconnexion 16, 316 dont le sens d'assemblage est le même pour les deux zones d'assemblage 30, 330.

Tout d'abord, les première 12, 312 et deuxième 14, 314 cellules sont disposées côte à côte, alignées selon la direction X, de sorte à mettre en vis-à-vis la première borne 22, 322 de la première cellule et la deuxième borne 24, 324 de la deuxième cellule. Pour former un organe électrique, de type module ou batterie, comportant une pluralité de cellules, le nombre souhaité de cellules peut être mis en place dès cette étape.

Ensuite, le dispositif 16, 316 d'interconnexion est présenté près des première 12, 312 et deuxième 14, 314 cellules, les première et deuxième zones d'assemblage 30, 330 étant alignées selon Y, respectivement avec la première borne 22, 322 de la première cellule et avec la deuxième borne 24, 324 de la deuxième cellule.

Le dispositif 16, 316 est ensuite approché selon Y desdites bornes, par une translation selon le sens d'assemblage. Les première et deuxième zones d'assemblage 30, 330 sont ainsi emboîtées simultanément sur les bornes correspondantes.

Pour former un organe électrique à l'aide d'une pluralité de cellules, les cellules éventuellement mises en place précédemment sont connectées deux à deux par une pluralité de dispositifs 16, 316 (non représentés).

Ce deuxième procédé permet ainsi de disposer les cellules dans la position finale souhaitée avant de les connecter deux à deux pour former un organe électrique.

Comme décrit ci-dessus, l'ensemble 10, 110, 210, 310 selon l'invention permet d'adapter facilement le nombre et la disposition des cellules d'un organe électrique de type module ou batterie.

La surface ce contact électrique entre les bornes et le dispositif d'interconnexion, éventuellement améliorée par la forme des zones d'assemblage, permet une adaptation en cas d'ampérage élevé des cellules.

Les dispositifs 16, 116, 216, 316 peuvent également permettre de connecter électriquement deux organes électriques déjà réalisés.

Les dispositifs 16, 116, 216, 316 sont facilement dissociés des bornes correspondantes, par un déplacement inverse du déplacement d'emboîtement. Les cellules et/ou les dispositifs d'interconnexion de l'ensemble 10, 110, 210, 310 peuvent ainsi être facilement réutilisés pour un nouvel assemblage.

## Revendications

1. Ensemble (10, 110, 210, 310) d'interconnexion de cellules électrochimiques pour véhicule électrique ou hybride, ledit ensemble comprenant une première (12, 212, 312) et une deuxième (14, 214, 314) cellules électrochimiques, chacune desdites première et deuxième cellules comprenant une enveloppe externe (20) et une borne (22, 24, 222, 224, 322, 324), ladite borne de chacune des première et deuxième cellules étant en saillie par rapport à l'enveloppe externe de ladite première ou deuxième cellule, respectivement selon un premier axe (26) et selon un deuxième axe (26) ; ladite borne de chacune des première et deuxième cellules comprenant une surface de contact (28, 228, 328), parallèle au premier ou au deuxième axe ;
ledit ensemble comprenant en outre un dispositif (16, 116, 216, 316) d'interconnexion, comportant une première et une deuxième zones d'assemblage (30, 130, 230, 330) reliées l'une à l'autre ; telles que dans une configuration installée de l'ensemble d'interconnexion, chacune des première et deuxième zones d'assemblage est au contact de la surface de contact (28, 228, 328) de la borne, respectivement de la première et de la deuxième cellules, le dispositif d'interconnexion assurant ainsi une connexion électrique entre les première et deuxième cellules ;
l'ensemble étant **caractérisé en ce qu'**au moins l'une des première et deuxième zones d'assemblage comprend : une partie centrale (34, 134, 234, 334) ; et deux pattes (36, 136, 236, 238, 336) en saillie par rapport à la partie centrale selon un même sens d'assemblage, chacune des pattes comprenant une extrémité libre, opposée à la partie centrale,
les deux pattes étant aptes à s'écarter élastiquement l'une de l'autre de sorte à emboîter élastiquement l'au moins une des première et deuxième zones d'assemblage sur la surface de contact de la borne de la première ou de la deuxième cellule, par translation du dispositif d'interconnexion selon le sens d'assemblage par rapport à ladite borne.

2. Ensemble (10, 110, 210) d'interconnexion selon la revendication 1, dans lequel la partie centrale (34, 134, 234) de l'au moins une des première et deuxième zones d'assemblage présente un bord frontal (44, 144, 244) apte à épouser une partie de la surface de contact (28, 228).

3. Ensemble (210) d'interconnexion selon l'une des revendications 1 ou 2, dans lequel le dispositif d'interconnexion (216) comprend en outre un bras de préhension (258) s'étendant à partir de l'extrémité libre d'une patte (238) de l'au moins une des première et deuxième zones d'assemblage.

4. Ensemble (210, 310) d'interconnexion selon l'une des revendications précédentes, dans lequel : l'un de la borne et du dispositif d'interconnexion comporte une surface en creux (254, 362) et l'autre de la borne et du dispositif d'interconnexion comporte un élément en saillie (255, 346) apte à s'insérer dans ladite surface en creux.

5. Ensemble (210) d'interconnexion selon la revendication 4, dans lequel : la surface de contact de la borne comporte une encoche (254) formant la surface en creux ; et une patte (236) de l'au moins une des première et deuxième zones d'assemblage comporte un ergot (255) apte à s'insérer dans l'encoche et formant l'élément saillant.

6. Ensemble (310) d'interconnexion selon la revendication 4, dans lequel : la borne (312, 314) comporte deux portions séparées par une fente (362) formant la surface en creux ; et l'élément saillant (346) est disposé entre les pattes (336) de l'au moins une des première et deuxième zones d'assemblage et s'étend à partir de la partie centrale (334) dans le sens d'assemblage.

7. Ensemble d'interconnexion selon l'une des revendications précédentes, dans lequel chacune des première et deuxième zones d'assemblage (30, 130, 230, 330) du dispositif d'interconnexion comprend une partie centrale et deux pattes (36, 136, 236, 238, 336) en saillie par rapport à la partie centrale, les pattes de la première et de la deuxième zones d'assemblage s'étendant respectivement selon un premier et selon un deuxième sens d'assemblage, chacune des pattes comprenant une extrémité libre, opposée à la partie centrale, les deux pattes de chacune des première et deuxième zones d'assemblage étant aptes à s'écarter élastiquement l'une de l'autre de sorte à emboîter élastiquement ladite première ou deuxième zone d'assemblage sur la surface de contact de la borne, respectivement de la première et de la deuxième cellule, par translation du dispositif d'interconnexion respectivement selon le premier et selon le deuxième sens d'assemblage par rapport à ladite borne.

8. Ensemble (10, 310) d'interconnexion selon la revendication 7, dans lequel les premier et deuxième sens d'assemblage sont identiques.

9. Ensemble (110, 210) d'interconnexion selon la revendication 7, dans lequel les premier et deuxième sens d'assemblage sont opposés.

10. Procédé d'assemblage de l'ensemble (10, 110, 210, 310) d'interconnexion selon l'une des revendications précédentes, comprenant la mise en contact électrique de chacune des première et deuxième zones d'assemblage (30, 130, 230, 330) du dispositif d'interconnexion (16, 116, 216, 316) avec la surface de contact (28, 228, 328) de la borne, respectivement de la première (12, 212, 312) et de la deuxième (14, 214, 314) cellules, ladite mise en contact de l'au moins l'une des première et deuxième zones d'assemblage étant réalisée par emboîtement élastique sur la surface de contact de la borne correspondante, par translation du dispositif d'interconnexion selon le sens d'assemblage par rapport à ladite borne.

11. Procédé selon la revendication 10, d'assemblage de l'ensemble d'interconnexion selon l'une des revendications 7 à 9, la mise en contact de chacune des première et deuxième zones d'assemblage (30, 130, 230, 330) étant réalisée par emboîtement élastique sur la surface de contact (28, 228, 328) de la borne, respectivement de la première (12, 312) et de la deuxième (14, 314) cellules, par translation du dispositif d'interconnexion selon le premier ou le deuxième sens d'assemblage par rapport à ladite borne.

12. Procédé selon la revendication 10, d'assemblage de l'ensemble (10, 310) d'interconnexion selon la revendication 8, comprenant la mise en contact électrique simultanée de la première et de la deuxième zones d'assemblage (30, 330) du dispositif d'interconnexion (16, 316) avec la surface de contact (28, 328) de la borne, respectivement de la première (12, 312) et de la deuxième (14, 314) cellules, ladite mise en contact électrique simultanée étant réalisée par emboîtement élastique de chacune des première et deuxième zones d'assemblage sur la surface de contact de la borne correspondante, par translation du dispositif d'interconnexion selon le sens d'assemblage par rapport auxdites borne.

13. Organe électrique comprenant une première (12, 212, 312) et une deuxième (14, 214, 314) cellules électrochimiques; et un dispositif (16, 116, 216, 316) d'interconnexion ;
chacune des première et deuxième cellules comprenant une enveloppe externe et une borne (22, 24, 222, 224, 312, 314), ladite borne de chacune des première et deuxième cellules étant en saillie par rapport à l'enveloppe externe de ladite première ou deuxième cellule, respectivement selon un premier axe (26) et selon un deuxième axe ; ladite borne de chacune des première et deuxième cellules comprenant une surface de contact (28, 228, 328), parallèle au premier ou au deuxième axe ;
le dispositif (16, 116, 216, 316) d'interconnexion, comportant une première et une deuxième zones d'assemblage (30, 130, 230, 330) reliées l'une à l'autre ; chacune des première et deuxième zones d'assemblage étant au contact de la surface de contact (28, 228, 328) de la borne, respectivement de la première et de la deuxième cellules, le dispositif d'interconnexion assurant ainsi une connexion électrique entre les première et deuxième cellules ;
au moins l'une des première et deuxième zones d'assemblage comprenant : une partie centrale (34, 134, 234, 334) ; et deux pattes (36, 136, 236, 238, 336) en saillie par rapport à la partie centrale selon un même sens d'assemblage, chacune des pattes comprenant une extrémité libre, opposée à la partie centrale, ladite au moins une des première et deuxième zones d'assemblage étant emboîtée élastiquement sur la surface de contact de la borne de la première ou de la deuxième cellule,
l'organe électrique étant susceptible d'être issu d'un procédé selon la revendication 10.

14. Organe électrique selon la revendication 13, dans lequel chacune des première et deuxième zones d'assemblage (30, 130, 230, 330) du dispositif d'interconnexion comprend une partie centrale et deux pattes (36, 136, 236, 238, 336) en saillie par rapport à la partie centrale, les pattes de la première et de la deuxième zones d'assemblage s'étendant respectivement selon un premier et selon un deuxième sens d'assemblage, chacune des pattes comprenant une extrémité libre, opposée à la partie centrale, chacune des première et deuxième zones d'assemblage étant emboîtée élastiquement sur la surface de contact de la borne, respectivement de la première et de la deuxième cellule,
l'organe électrique étant susceptible d'être issu d'un procédé selon la revendication 11.

## Revendications modifiées

### Revendications modifiées conformément à la règle 137(2) CBE.

1. Ensemble (210) d'interconnexion de cellules électrochimiques pour véhicule électrique ou hybride, ledit ensemble comprenant une première (212) et une deuxième (214) cellules électrochimiques, chacune desdites première et deuxième cellules comprenant une enveloppe externe (20) et une borne (222, 224), ladite borne de chacune des première et deuxième cellules étant en saillie par rapport à l'enveloppe externe de ladite première ou deuxième cellule, respectivement selon un premier axe (26) et selon un deuxième axe (26) ; ladite borne de chacune des première et deuxième cellules comprenant une surface de contact (228), parallèle au premier ou au deuxième axe ;
ledit ensemble comprenant en outre un dispositif (216) d'interconnexion, comportant une première et une deuxième zones d'assemblage (230) reliées l'une à l'autre ; telles que dans une configuration installée de l'ensemble d'interconnexion, chacune des première et deuxième zones d'assemblage est au contact de la surface de contact (228) de la borne, respectivement de la première et de la deuxième cellules, le dispositif d'interconnexion assurant ainsi une connexion électrique entre les première et deuxième cellules ;
au moins l'une des première et deuxième zones d'assemblage comprenant : une partie centrale (234) ; et deux pattes (236, 238) en saillie par rapport à la partie centrale selon un même sens d'assemblage, chacune des pattes comprenant une extrémité libre, opposée à la partie centrale,
les deux pattes étant aptes à s'écarter élastiquement l'une de l'autre de sorte à emboîter élastiquement l'au moins une des première et deuxième zones d'assemblage sur la surface de contact de la borne de la première ou de la deuxième cellule, par translation du dispositif d'interconnexion selon le sens d'assemblage par rapport à ladite borne ;
l'ensemble étant **caractérisé en ce que** la surface de contact de la borne comporte une encoche (254) ; et une patte (236) de l'au moins une des première et deuxième zones d'assemblage comporte un ergot (255) apte à s'insérer dans l'encoche.

2. Ensemble (210) d'interconnexion selon la revendication 1, dans lequel la partie centrale (234) de l'au moins une des première et deuxième zones d'assemblage présente un bord frontal (244) apte à épouser une partie de la surface de contact (228).

3. Ensemble (210) d'interconnexion selon l'une des revendications 1 ou 2, dans lequel le dispositif d'interconnexion (216) comprend en outre un bras de préhension (258) s'étendant à partir de l'extrémité libre d'une patte (238) de l'au moins une des première et deuxième zones d'assemblage.

4. Ensemble d'interconnexion selon l'une des revendications précédentes, dans lequel chacune des première et deuxième zones d'assemblage (230) du dispositif d'interconnexion comprend une partie centrale et deux pattes (236, 238) en saillie par rapport à la partie centrale, les pattes de la première et de la deuxième zones d'assemblage s'étendant respectivement selon un premier et selon un deuxième sens d'assemblage, chacune des pattes comprenant une extrémité libre, opposée à la partie centrale, les deux pattes de chacune des première et deuxième zones d'assemblage étant aptes à s'écarter élastiquement l'une de l'autre de sorte à emboîter élastiquement ladite première ou deuxième zone d'assemblage sur la surface de contact de la borne, respectivement de la première et de la deuxième cellule, par translation du dispositif d'interconnexion respectivement selon le premier et selon le deuxième sens d'assemblage par rapport à ladite borne.

5. Ensemble (210) d'interconnexion selon la revendication 4, dans lequel les premier et deuxième sens d'assemblage sont opposés.

6. Procédé d'assemblage de l'ensemble (210) d'interconnexion selon l'une des revendications précédentes, comprenant la mise en contact électrique de chacune des première et deuxième zones d'assemblage (230) du dispositif d'interconnexion (216) avec la surface de contact (228) de la borne, respectivement de la première (212) et de la deuxième (214) cellules, ladite mise en contact électrique comprenant l'insertion de l'ergot (255) dans l'encoche (254), ladite mise en contact de l'au moins l'une des première et deuxième zones d'assemblage étant réalisée par emboîtement élastique sur la surface de contact de la borne correspondante, par translation du dispositif d'interconnexion selon le sens d'assemblage par rapport à ladite borne.

7. Procédé selon la revendication 6, d'assemblage de l'ensemble d'interconnexion selon l'une des revendications 4 ou 5, la mise en contact de chacune des première et deuxième zones d'assemblage (230) étant réalisée par emboîtement élastique sur la surface de contact (228) de la borne, respectivement de la première (212) et de la deuxième (214) cellules, par translation du dispositif d'interconnexion selon le premier ou le deuxième sens d'assemblage par rapport à ladite borne.

8. Organe électrique comprenant une première (212) et une deuxième (214) cellules électrochimiques ; et un dispositif (216) d'interconnexion ;
chacune des première et deuxième cellules comprenant une enveloppe externe et une borne (222, 224), ladite borne de chacune des première et deuxième cellules étant en saillie par rapport à l'enveloppe externe de ladite première ou deuxième cellule, respectivement selon un premier axe (26) et selon un deuxième axe ; ladite borne de chacune des première et deuxième cellules comprenant une surface de contact (228, 328), parallèle au premier ou au deuxième axe ;
le dispositif (216) d'interconnexion, comportant une première et une deuxième zones d'assemblage (230) reliées l'une à l'autre ; chacune des première et deuxième zones d'assemblage étant au contact de la surface de contact (228) de la borne, respectivement de la première et de la deuxième cellules, le dispositif d'interconnexion assurant ainsi une connexion électrique entre les première et deuxième cellules ;
au moins l'une des première et deuxième zones d'assemblage comprenant : une partie centrale (234) ; et deux pattes (236, 238) en saillie par rapport à la partie centrale selon un même sens d'assemblage, chacune des pattes comprenant une extrémité libre, opposée à la partie centrale, ladite au moins une des première et deuxième zones d'assemblage étant emboîtée élastiquement sur la surface de contact de la borne de la première ou de la deuxième cellule,
l'organe électrique étant susceptible d'être issu d'un procédé selon la revendication 10.

9. Organe électrique selon la revendication 8, dans lequel chacune des première et deuxième zones d'assemblage (230) du dispositif d'interconnexion comprend une partie centrale et deux pattes (236, 238) en saillie par rapport à la partie centrale, les pattes de la première et de la deuxième zones d'assemblage s'étendant respectivement selon un premier et selon un deuxième sens d'assemblage, chacune des pattes comprenant une extrémité libre, opposée à la partie centrale, chacune des première et deuxième zones d'assemblage étant emboîtée élastiquement sur la surface de contact de la borne, respectivement de la première et de la deuxième cellule,
l'organe électrique étant susceptible d'être issu d'un procédé selon la revendication 7.
